## Europäisches Patentamt
## European Patent Office
## Office européen des brevets

(19)

(11) Publication number: **0 260 071**
**A2**

(12) # EUROPEAN PATENT APPLICATION

(21) Application number: **87307806.7**

(22) Date of filing: **03.09.87**

(51) Int. Cl.⁴: **C 01 B 33/28**

(30) Priority: **11.09.86 JP 214315/86**
**02.12.86 JP 287491/86**

(43) Date of publication of application:
**16.03.88 Bulletin 88/11**

(84) Designated Contracting States:
**AT BE CH DE ES FR GB IT LI NL SE**

(71) Applicant: **LION CORPORATION**
**3-7, Honjo 1-chome**
**Sumida-ku Tokyo (JP)**

(72) Inventor: **Johna, Nobuo**
**1-104, 3-457-112, Fujiwara-cho**
**Funabashi-shi Chiba (JP)**

**Ishikawa, Tsutomu**
**5-16-8, Nishinippori**
**Arakawa-ku Tokyo (JP)**

**Iwabuchi, Hiroyuki**
**Dai 2 Shiratori mansion 202 1-3-24, Hanasaki**
**Narashino-shi Chiba (JP)**

**Nakamura, Masayoshi**
**477-10, Hatamachi**
**Chiba-shi Chiba (JP)**

(74) Representative: **Fisher, Bernard et al**
**Raworth, Moss & Cook 36 Sydenham Road**
**Croydon Surrey CR0 2EF (GB)**

The title of the invention has been amended (Guidelines for Examination in the EPO, A-III, 7.3).

(54) **Metal exchanged zeolite and ceramic composite therefrom.**

(57) A process for producing a metal exchanged zeolite for use in the production of a metal zeolite composite ceramic comprising the step of bringing sodium-type or potassium-type zeolite in the form of powder or slurry into contact with an aqueous solution containing a metal ion capable of substituting for sodium or potassium ion, whereby 70% or more of sodium and potassium ions of the zeolite are exchanged with the metal ion. The resultant metal exchanged zeolite is reduced and sintered to obtain a metal-zeolite composite ceramic having an improved strength.

EP 0 260 071 A2

**Description**

METAL ZEOLITE COMPOSITE CERAMIC

BACKGROUND OF THE INVENTION

1. Field of the Invention

The present invention relates to a metal zeolite composite ceramic containing a metal uniformly dispersed therein substantially in the atomic size (the term atomic size as used therein refers to the size of the metal particles when dispersed) and a process for producing a starting material thereof.

2. Description of the Related Art

Ceramics are known as materials having advantageous properties such as a high hardness and a high melting point, but having a drawback such as brittleness. To remove this drawback, ceramics have been mixed with metal having a high elasticity. Furthermore, a conductivity is sometimes desired, depending upon the field of application, even though ceramics are generally considered to be good insulating materials. To obtain this conductivity, the metallization of ceramics by the addition of metal powder has been attempted. On the other hand, ceramics composed of silica/alumina have another drawback, i.e., a relatively poor heat resistance, in addition to the above-mentioned brittleness and, therefore, desilicated materials such as high purity alumina are mainly used in fields requiring a high heat resistance.

Regarding the composite material of metals and ceramics, sintered products of 40% by weight or more of iron sand and ceramic materials other than iron sand (e.g., nickel oxide) are described in JP-A-52-65504 as regenerating materials for use in, for example, home heating apparatus and industrial heat exchangers. However, since the metal (i.e., iron sand) is mixed in the form of coarse powder particles in this method, the resultant ceramics are heterogeneously dispersed when viewed micrographically and, therefore, the desired uniform ceramics having an improved brittleness and high toughness cannot be obtained. Furthermore, the mixing and sintering of ceramic materials and ultrafine metal powder are known in the production of catalysts. However, the dispersion of the metal according to this method is still heterogeneous or nonuniform in view of the atomic size level and, therefore, the desired homogeneous or uniform metal composite ceramics cannot be obtained.

Furthermore, in the above-mentioned dispersion system of metal powder or fine particles, a large amount of expensive metal must be used to properly exhibit the properties of the metal and, therefore, the cost is unpreferably increased.

Zeolites are used as raw materials for, for example, catalysts, catalyst carriers or supports, molecular sieves, adsorbents, and detergent builders, and are available at a low cost. The exchange of sodium ion in zeolites with an another metal salt is carried out in the production of catalysts. For example, JP-A-53-96999 discloses the production of metal carbonyl cluster heterogeneous catalysts retained in the crystalline structures of zeolites by exchanging zeolites with salts such as rhodium salts or metal complexes, followed by the reduction and carbonylation of the metals. However, in this case, zeolite is ultilized as a support for the metal carbonyl. This is essentially different from the present invention, in which an improvement of ceramics obtained by sintering a zeolite is intended. That is, the products produced in the present invention are molded products of ceramics containing metals uniformly dispersed therein.

SUMMARY OF THE INVENTION

Accordingly, the objects of the present invention are to eliminate the above-mentioned disadvantages of the prior art and to provide a homogeneous metal zeolite composite ceramic containing metal powder uniformly dispersed therein substantially in the atomic size and a production process of a metal exchanged zeolite for use in the production of the metal zeolite composite ceramic.

Another object of the present invention is to provide a metal zeolite composite ceramic having a strong toughness and small scattering in the quality thereof.

Other objects and advantages of the present invention will be apparent from the following description.

In accordance with the present invention, there is provided a metal exchanged zeolite for use in the production of a metal zeolite composite ceramic comprising (i) 40% to 95% by weight of zeolite and (ii) 5% to 60% by weight of a metal.

In accordance with the present invention, there is also provided a process for producing a metal exchanged zeolite for use in the production of a metal zeolite composite ceramic comprising the step of bringing a sodium-type or potassium-type zeolite in the form of powder into contact with an aqueous solution containing a metal ion capable of substituting for sodium or potassium ion, whereby 70% or more of sodium and potassium ions of the zeolite are exchanged with the metal ion.

In accordance with the present invention, there is further provided a process for producing a metal-zeolite composite ceramic comprising the steps of:

(a) bringing sodium-type or potassium-type zeolite in the form of powder into contact with an aqueous solution containing a metal ion capable of substituting for sodium ion or potassium ion, whereby 70% or more of sodium and potassium ions of the zeolite are exchanged with the metal ion, and

(b) heating the metal ion exchanged zeolite under a reducing atmosphere at a temperature of 200°C to 2000°C, followed by or simultaneously with sintering at a temperature of 200°C to 2000°C.

## BRIEF DESCRIPTION OF THE DRAWING

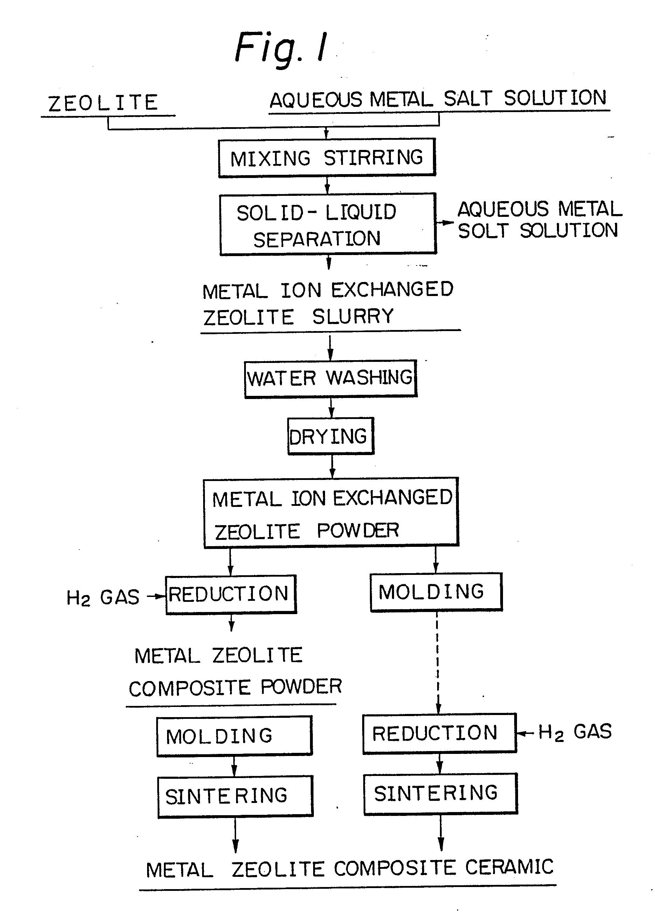

The present invention will be better understood from the description set forth below with reference to the accompanying drawing of Figure 1, which schematically illustrates a preferred embodiment of a process flow showing the production process of the metal-zeolite composite ceramic according to the present invention.

## DESCRIPTION OF THE PREFERRED EMBODIMENTS

According to the present invention, as shown in Figure 1, zeolite in the form of powder is brought into contact with an aqueous solution containing a metal ion capable of substituting for Na ion or K ion in the zeolite by mixing and stirring. Thus, 70% or more of the Na ion and K ion in the zeolite is exchanged with the metal ion.

The zeolites are aluminosilicates represented by the following formula (I) as the anhydride.

$$mMeO \bullet Al_2O_3 \bullet nSiO_2 \quad (I)$$

wherein Me is Na or K, $m$ is 1.5 to 2.5 and $n$ is 1 to 100.

Thus, zeolites are formed by a three dimensional skeleton, in which an aluminum atom, oxygen atom and silicon atom are bonded to each other, and a negative charge of

$$- \overset{\displaystyle |}{\underset{\displaystyle |}{Al}} \overset{\ominus}{} -$$

is neutralized by a sodium ion Na $\oplus$ . The values $m$ and $n$ vary in accordance with the types of zeolites.

Although various crystalline zeolites may be used in the present invention, type-A, type-X, and type-Y zeolites are preferable because of the high metal ion exchangeability thereof. However, hydroxy sodalite type zeolites are also usable depending upon the type of metals to be exchanged.

The exchange of Na or K in the zeolites with a metal ion is carried out until 70% or more, preferably 90% or more, of Na and K in the zeolites is exchanged with the metal ion. When the exchange rate of Na and K is less than 70%, the performance of the metal is not sufficiently exhibited and, therefore, the drawback of the ceramics, such as brittleness, is not sufficiently improved.

The metals usable in the present invention include those belonging to groups Ia to VIIa, Ib to VIb, and VIII of the Periodic Table.

Typical examples of the metals suitable for use in the improvement of brittleness, i.e., providing the ceramics with a high strength, are zirconium, titanium, cobalt, chromium, molybdenum, tungsten, magnesium, aluminum, rubidium, yttrium, zinc, thallium, lanthanum, cesium, iron, cobalt, and nickel.

On the other hand, to provide the ceramics with the properties of conductive materials or semiconductor materials, metals such as silver, manganese, nickel, cobalt, cadmium, and copper are preferably used. For strong dielectric materials, strontium, rubidium, zirconium, tin, and lead are preferably used. Furthermore, when the ceramics are intended for use as heat generating materials, molybdenum and zirconium are preferably used.

When the zeolite is brought into contact with an aqueous metal salt solution, the Na and K ions in the zeolite are exchanged with the metal ion in the aqueous solution, and thus the metal ion is incorporated into the micropores of the structural units of the zeolite substantially in the atomic size state by chemical adsorption. To obtain a sufficiently high metal ion exchange rate, the metal ions must be incorporated into substantially all of the micropores, which are the structural units of a zeolite. Although there are no limitations to the particle sizes of the zeolites, zeolites having a particle size of 5 μm or less, more preferably 0.5 μm or less, are preferably used for the purpose of the present invention.

The metal ion exchanged zeolite, in which the Na or K ion in the zeolite is exchanged with a metal ion, is then subjected to a solid-liquid separation. Thus, the metal ion exchanged zeolite is recovered in the form of a cake. The cake is then washed with water to remove Na or K ions and the metal ion remaining in the aqueous solution within the micropore, followed by drying, usually at a temperature of, for example, 50°C to 400°C.

The metal ion exchanged zeolite powder obtained above is used as a starting material for the production of a metal-zeolite composite ceramic. The metal-zeolite composite ceramic may be produced after preparing a metal-zeolite composite powder or by directly molding the metal ion exchanged zeolite.

In the former process flow shown in Fig. 1, the metal ion exchanged zeolite powder is reduced in the presence of hydrogen gas upon heating at a temperature of 200°C to 2000°C, preferably 300°C to 1500°C. When the temperature is too low, the desired reduction process does not proceed. On the other hand, when the temperature is too high, the starting powder is melted. According to the reduction step, the metal ions incorporated into zeolite substantially in the atomic size state are reduced to obtain the metal-zeolite composite powder. This powder is used as a starting material for the metal-zeolite composite ceramic.

Thereafter, the metal-zeolite composite powder obtained above was molded, optionally after adding an inorganic or organic binder, to the desired shape by, for example, compression molding, followed by sintering at a temperature of 200°C to 2000°C, preferably 700°C to 1600°C. Thus, the desired metal-zeolite composite ceramic is produced. When the sintering temperature is too low, the dense sintered product cannot be obtained. Contrary to this, when the sintering temperature is too high, the powder is melted and, therefore, a uniform ceramic cannot be obtained.

In the metal-zeolite composite ceramic obtained above, the metal is uniformly dispersed therein substantially in the atomic size, the characteristics of the metal, such as elasticity and conductivity are given while retaining the hardness of ceramics. Although there are no critical limitations to the amount of the metal in the metal-zeolite composite ceramics, the metal is preferably present in an amount of 2% to 150% by weight, more preferably 5% to 100% by weight, based on the weight of the zeolite (anhydride), depending upon the type of the zeolite and the atomic weight of the metal.

On the other hand, when the ceramic is directly molded without recovering the metal-zeolite composite powder, the metal ion exchanged zeolite powder is molded, then reduced, and finally sintered. The details in each step are as described above. However, it should be noted that the reduction and sintering steps may be carried out either by first reducing the metal ion exchanged zeolite powder under a hydrogen gas atmosphere and, then, separately sintering the reduced powder under an air atmosphere, or by simultaneously reducing and sintering the powder under a hydrogen gas atmosphere.

According to the present invention, there is provided a ceramic composition comprising (i) 40% to 95% by weight, preferably 60% to 93% by weight, of silica and alumina and (ii) 5% to 60% by weight of a metal, the metal being dispersed as a ultrafine powder particle having a size of 0.5 μm or less in the composition. When the total amount of the silica and alumina is less than 40% by weight, the inherent advantageous properties of the ceramics are not effected. Contrary to this, when this amount is more than 95% by weight, the desired improvement in the brittleness is not effected. The preferable ratio of silica/alumina is 0.1 to 100, more preferably 0.5 to 20.

On the other hand, when the amount of the metal in the ceramic composition is less than 5% by weight, the desired improvement in the brittleness is not effected. Contrary to this, when the amount of the metal in the ceramic composition is more than 60% by weight, the ultrafine powder particles of the metal become aggregated to form coarse particles and, therefore, the ceramics derived therefrom become brittle.

According to this embodiment, the metal should be uniformly dispersed, as ultrafine particles having a size of 0.5 μm or less, preferably 0.05 μm or less, in the ceramic composition. When the particle size of the metal is more than 0.5 μm, the resultant ceramics are not uniform or homogeneous and a drastic improvement in the brittleness is not obtained.

As explained above, according to the present invention, 70% or more of sodium and/or potassium ions in the zeolite powder are exchanged with a metal, followed by reducing and sintering, whereby the metal-zeolite composite ceramics containing a uniformly dispersed metal substantially in the atomic size can be produced. Thus, tough ceramics having both the specific characteristics of ceramics (e.g., hardness) and the specific characteristics of metals (e.g., elasticity and conductivity) are obtained. Furthermore, since the metal is dispersed in the atomic size, the properties are uniform without substantial scattering and the amount of the metal required to provide the desired metallic properties is small. Accordingly, the present invention is economically and industrially advantageous.

Furthermore, as mentioned above, according to the present invention, there is provided the starting material for the above-mentioned metal-zeolite composite ceramics. This starting material easily provides the ceramics having the above-mentioned characteristics by sintering or reducing and sintering.

Furthermore, according to the present invention, when the ultrafine metal powder particles having a size of 0.5 μm or less are uniformly dispersed in the ceramics, the brittleness of the ceramics is advantageously improved.

## Examples

The present invention will now be further illustrated by, but is by no means limited to, the following Examples, wherein all parts and percentages are expressed on a weight basis unless otherwise noted. The evaluation methods used in the following Examples are as follows.

### 1. Flexural Strength

The flexural strength was determined according to a flexural strength test method for fine ceramics defined by Japanese Industrial Standard (JIS)-R 1601. The test atmosphere is air at room temperature.

### 2. Scattering

The scattering of the strength was evaluated by the Weibull coefficient $\underline{m}$. The coefficient $\underline{m}$ was determined as follows. That is, flexural stresses S were measured by varying the volumes V of the test pieces, and the values of the measured S and V were plotted based on a correlationship of $\log S = -\frac{1}{m} \log V$ on a logarithmic graph paper. Thus, the Weibull coefficient $\underline{m}$ was determined from the slant.

### 3. Percentage of Metal Ion Exchange

The amount of the metal ion in an aqueous solution of a metal salt before mixing with the zeolite, and the total amount of the metal ion in an aqueous solution of a metal salt after mixing with and separating from the zeolite and in water obtained by washing the separated zeolite, were measured. The amount of the metal ion consumed was calculated from the difference of these amounts, and the amount and the percentage of the metal ion substituted for sodium ion or potassium ion in the zeolite were determined therefrom.

4. Particle Size of Metal Particle

An electron photomicrograph ($10^4$ - $10^6$ × magnification) was obtained, and from the particles in the electron photomicrograph, the metal particles were identified by an X-ray microanalyzer (XMA) and the particle sizes thereof were measured. The average size of the measured particles was calculated.

Example 1

A 86.8 g amount of ferrous chloride ($FeCl_2$) was dissolved in 2 liters of water, followed by adding 128 g of type-A zeolite (Na type, purity:77.8%) thereto, while stirring. The mixture was stirred until the Fe exchange rate became 100%.

The dispersion obtained above was then filtered by suction to effect a solid-liquid separation, followed by thoroughly washing with water. The resultant cake was dried in a dryer at a temperature of 105°C for 2 hours to obtain an Fe ion-exchanged zeolite powder. The Fe content in the Fe ion-exchanged zeolite was 19.0% based on the zeolite anhydride.

Thereafter, 100 g of the Fe ion-exchanged zeolite powder was charged into an autoclave. After air in the autoclave was replaced with hydrogen gas, the hydrogen pressure was raised to 5 kg/cm² and the reduction was carried out at a temperature of 400°C for 3 hours. The autoclave was then cooled to room temperature and the resultant powder was recovered. The test piece was molded under a pressure of 5 ton/cm² and was then sintered in an electric furnace at a temperature of 800°C for 70 hours. Thus, the desired Fe-zeolite composite ceramic product was obtained.

The flexural strength of the resultant ceramic is shown in Table 1.

Example 2

A 125.0 g amount of cobalt nitrate $Co(NO_3)_2 \bullet 6H_2O$ was dissolved in 2 liters of water to prepare an aqueous cobalt salt solution. In this solution, 128 g of the type-A zeolite used in Example 1 was uniformly dispersed, while stirring. The mixture was stirred until the exchange rate of cobalt became 90% or more.

Thereafter, the Co ion-exchanged zeolite powder was obtained in the same manner as in Example 1, and the desired Co-zeolite composite ceramic was obtained by reducing and sintering the resultant Co-exchanged zeolite powder in the same manner as in Example 1.

The flexural strength of the resultant ceramic is shown in Table 1.

Example 3

A 274.0 g amount of cesium nitrate $CsNO_3$ was dissolved in 2 liters of water to prepare an aqueous cesium salt solution. In this aqueous solution, 128 g of type-Y zeolite was uniformly dispersed while stirring and the mixture was stirred until the Cs exchange rate became 90% or more.

Thereafter, the Cs ion-exchanged zeolite powder was obtained in the same manner as in Example 1, and the desired Cs-zeolite composite ceramic was obtained by reducing and sintering the resultant Cs ion-exchanged zeolite powder in the same manner as in Example 1.

The flexural strength of the resultant ceramic is shown in Table 1.

Comparative Example 1

Type-A zeolite ceramic was obtained in the same manner as in Example 1, except that ferrous chloride was not used.

The flexural strength of the type-A zeolite ceramic obtained above is shown in Table 1.

## Table 1

| Ceramic | | Example 1 | Example 2 | Example 3 | Comparative Example 1 |
|---|---|---|---|---|---|
| Zeolite | Kind | Type-A | Type-A | Type-Y | Type-A |
| | Amount (part) (as anhydride) | 100 | 100 | 100 | 100 |
| Metal | Kind | Fe | Co | Cs | – |
| | Amount (part) | 19.6 | 18.6 | 50.8 | |
| Metal Ion Exchange Rate (%) | | 100 | 90 | 100 | – |
| Flexural Strength $(kg/mm^2)$ | | 50 | 70 | 40 | 10 |
| Metal particle size $(\overset{\circ}{A})$ | | 50 | 30 | 300 | – |

As is clear from the results shown in Table 1, the metal-zeolite composite ceramics obtained according to the present invention exhibit a large flexural strength and, therefore, provide an excellent toughness.

Example 4

A 304.2 g amount of zirconium nitrate $Zr(NO_3)_4$ was dissolved in 6 liters of water, followed by uniformly dispersing therein 384 g of type-Y zeolite (Na-type, purity = 78%), while stirring. The dispersion was stirred until the Zr exchange ratio became 100%.

Thereafter, the dispersion was filtered by suction to effect a solid-liquid separation, followed by thoroughly washing with water. The resultant cake was dried in a dryer at a temperature of 105°C for 2 hours to obtain a Zr ion-exchanged zeolite powder.

Then 100 g of the Zr ion-exchanged zeolite powder was charged into an autoclave, and the reduction was carried out at a temperature of 300°C for 3 hours under a hydrogen pressure of 3 kg/cm$^2$. The autoclave was then cooled and the resultant powder was recovered at room temperature. The resultant powder was molded under a pressure of 5 ton/cm$^2$ to obtain a test piece, and the test piece was then sintered in an electric furnace at a temperature of 900°C for 50 hours. Thus, the desired Zr-zeolite composite ceramic was obtained.

The flexural strength and the scattering thereof of the resultant ceramic are shown in Table 2.

Example 5

The Zr ion-exchanged zeolite powder obtained in Example 4 was molded under a pressure of 5 ton/cm$^2$ to prepare a test piece. The test piece was then reduced and sintered under a hydrogen atmosphere in an electric furnace at a temperature of 900°C for 50 hours. Thus, the desired Zr-zeolite composite ceramic was obtained.

The flexural strength of the ceramic is shown in Table 2.

Example 6

The Zr ion-exchanged zeolite powder obtained in Example 4 was molded under a pressure of 5 ton/cm$^2$ to prepare a test piece. The test piece was then sintered under air in an electric furnace at a temperature of 900°C for 50 hours. Thus, the desired Zr ion-exchanged zeolite ceramic was obtained.

The flexural strength of the ceramic and the scattering thereof are shown in Table 2.

Comparative Example 2

The type-Y zeolite powder used in Example 4 was molded under a pressure of 5 ton/cm² to obtain a test piece. The test piece was then sintered under air in an electric furnace at a temperature of 900°C for 50 hours. Thus, a ceramic consisting of type Y-zeolite was obtained.

The flexural strength of the ceramic and the scattering thereof are shown in Table 2.

## Table 2

| | Example 4 | Example 5 | Example 6 | Comparative Example 2 |
|---|---|---|---|---|
| Treatment Condition | $H_2$ gas Baking after reduction | $H_2$ gas Simultaneous baking with reduction | Air Baking (No reduction) | Air Baking |
| Flexural Strength $(kg/mm^2)$ | 60 | 80 | 20 | 9 |
| Scattering | 15 | 18 | 10 | 5 |

As is clear from the results shown in Table 2, the ceramics produced from the metal-zeolite ceramic base materials according to the present invention exhibit a large flexural strength and provide an excellent toughness with a small scattering, and therefore, the resultant ceramics have excellent properties.

Examples 7 and 8

After 239 g of silver nitrate AgNO₃ was dissolved in 2 liters of water, 100 g, in terms of the anhydride, of a type-X zeolite having a SiO₂/Al₂O₃ ratio of 3 was added to the aqueous solution, while stirring, until the amount of the exchanged Ag became as set forth in Table 3. Then, the resultant dispersion was filtered by suction to effect a solid-liquid separation, followed by thoroughly washing with water. After drying, the resultant cake was reduced under a hydrogen gas atmosphere at a temperature of 400°C for 5 hours. The resultant powder was molded under a pressure of 5 ton/cm² to prepare a test piece. The test piece was then sintered in an electric furnace at a temperature of 1000°C to obtain the desired ceramic.

The composition of the resultant ceramic and the properties thereof are shown in Table 3.

Comparative Example 3

After 370 g of silver nitrate AgNO₃ was dissolved in 2 liters of water, 100 g, in terms of anhydride, of type-X zeolite having an SiO₂/Al₂O₃ ratio of 3 was added to the resultant solution, while stirring. The mixture was allowed to stand for one night, while stirring, and was then reduced with formaldehyde. The dispersion was filtered by suction to effect a solid-liquid separation, followed by washing with water. No substantial amount of silver ion was found in the mother liquor after reduction or a washed solution.

After the cake obtained above was dried, the dried cake was molded under a pressure of 5 ton/cm² to prepare a test piece. The test piece was then sintered in an electric furnace at a temperature of 1000°C. Thus, the desired ceramic was obtained.

The composition and properties of the resultant ceramic are shown in Table 3.

Comparative Example 4

After the type-X zeolite used in Example 7 was thoroughly washed with water, the zeolite was dried, followed by allowing to stand under a hydrogen atmosphere at a temperature of 600°C for 8 hours. Thereafter, the resultant zeolite was molded under a pressure of 5 ton/cm² to prepare a test piece. The resultant test piece was then sintered at a temperature of 1000°C to obtain the desired ceramic.

The property of the resultant ceramic is shown in Table 3.

0 260 071

## Table 3

| | | Example 7 | Example 8 | Comparative Example 3 | Comparative Example 4 |
|---|---|---|---|---|---|
| Composition (%) | $SiO_2$ | 52 | 63 | 22 | 74 |
| | $Al_2O_3$ | 18 | 22 | 8 | 26 |
| | Ag | 30 | 15 | 70 | 0 |
| Silver particle size (Å) | | 200 | 80 | 10,000 | – |
| Flexural strength $(kg/mm^2)$ | | 30 | 20 | 7 | 5 |

Example 9

After 156.8 g of silver nitrate $Cu(NO_3)_2$ was dissolved in 2 liters of water, 100 g, in terms of anhydride, sodium-exchange type-Y zeolite ($SiO_2/AlO_3 = 6$) was added to the resultant solution, followed by stirring. The Cu exchange was carried out until the copper content in the zeolite became 15%. Then, an aqueous ammonia was added thereto to exchange the remaining sodium ion with ammonium ion. The resultant dispersion was filtered by suction to effect a solid-liquid separation, followed by washing with water. The resultant cake was dried in a dryer at a temperature of 105°C for 2 hours to obtain a Cu-exchanged zeolite powder.

The Cu-exchanged zeolite obtained above was charged into an autoclave. After the inside air was replaced with hydrogen gas, the hydrogen pressure in the autoclave was increased to 5 $kg/cm^2$ and the reduction was carried out at a temperature of 430°C for 10 hours. The autoclave was cooled to room temperature and the resultant powder was recovered. The resultant powder was molded under a pressure of 5 $ton/cm^2$ to prepare a test piece.

The test piece was then sintered in an electric furnace at a temperature of 1000°C for 5 hours to obtain the desired ceramic.

The composition and property of the ceramic are shown in Table 4.

Comparative Example 5

A 135 g amount of the zeolite (anhydride 73.9%) used in Example 9 was dispersed, while stirring, in 2 liters of a 20% aqueous ammonia, followed by allowing to stand for one night. Then, the dispersion was filtered by suction to effect a solid-liquid separation. After thoroughly washing with water, the resultant cake was dried.

To 109.0 g of the powder (anhydride 73.4%) obtained above, 12.5 g of silver powder (Ag 100%) having a size of 2 μm was added, followed by uniformly mixing in a mixer. Thereafter, the mixture was molded under a pressure of 5 $ton/cm^2$ to prepare a test piece. The test piece was sintered at a temperature of 1000°C to obtain the desired ceramic.

The composition and property of the ceramic are shown in Table 4.

## Table 4

|  |  | Example 9 | Comparative Example 5 |
|---|---|---|---|
| Component (%) | SiO$_2$ | 63 | 63 |
|  | Al$_2$O$_3$ | 22 | 22 |
|  | Cu | 15 | 15 |
| Particle size of copper (μm) |  | 0.03 | 5 |
| Flexural strength (kg/mm$^2$) |  | 25 | 6 |

Example 10

A 227.0 g amount of silver nitrate (AgNO$_3$ 100%) was dissolved in 2000 g of purified water and 100 g, in terms of the anhydride, of phosphate zeolite (Na$_2$O = 20.7%, Al$_2$O$_3$ = 34.0%, SiO$_2$ = 33.7%, P$_2$O$_5$ = 11.5%) was then added thereto, followed by thoroughly stirring. After dispersing, a solid-liquid separation was effected and the separated solid was thoroughly washed with water. After drying, the silver-exchanged phosphate zeolite powder was obtained. The composition of the zeolite anhydride was Ag$_2$O = 49.4%, Al$_2$O$_3$ = 21.7%. SiO$_2$ = 21.5%, and P$_2$O$_5$ = 7.4%.

The powder obtained above was reduced under a hydrogen gas atmosphere at a temperature of 300°C for 8 hours. After the reduction, the powder was molded under a pressure of 5 ton/cm$^2$ to prepare a test piece. The test piece was then sintered in an electric furnace at a temperature of 1000°C to obtain the desired ceramic.

The composition and property of the ceramic are shown in Table 5.

Comparative Example 6

After thoroughly washing the phosphate zeolite used in Example 10 with water, followed by drying, the zeolite was allowed to stand under a hydrogen atmosphere at a temperature of 300°C for 8 hours. Thereafter, the zeolite was molded under a pressure of 5 ton/cm$^2$ to prepare a test piece. The test piece was then sintered at a temperature of 1000°C to obtain the desired ceramic.

The composition and property of the ceramic are shown in Table 5.

## Table 5

|  |  | Example 10 | Comparative Example 6 |
|---|---|---|---|
| Component (%) | SiO$_2$ | 21.5 | 33.7 |
|  | Al$_2$O$_3$ | 21.7 | 34.0 |
|  | P$_2$O$_5$ | 7.4 | 11.5 |
|  | Na$_2$O | – | 20.7 |
|  | Ag | 49.4 | – |
| Ag particle size (Å) |  | 100 | – |
| Flexural strength (kg/mm$^2$) |  | 18 | 3 |

Example 11

A 41.2 g amount of nickel nitrate (Ni(NO$_3$)$_2$) and 38.3 g of silver nitrate (AgNO$_3$) were dissolved in 2 liters of water to prepare and aqueous nickel and silver salt solution. In this solution, 164.5 g of the type-A zeolite (purity:77.8%) was uniformly dispersed, while stirring. The mixture was stirred until the exchange rate of nickel and silver became 90% or more. Therefore, the Ni and Ag ion-exchanged zeolite powder was obtained in the same manner as in Example 1,

Therefore 100 g of the Ni and Ag ion-exchanged zeolite powder was changed into an autoclave. After air in the autoclave was replaced with hydrogen gas, and heated to a temperature of 400°C and then the gas in the autoclave was replaced with hydrogen gas once more, the hydrogen pressure was raised to 10 kg/cm$^2$ and the reduction was carried out at a temperature of 400°C for 8 hours. In this case, mole percent of the hydrogen gas in the autoclave was 95% more over.

The autoclave was then cooled to room temperature and the resultant black powder was recovered. The test piece was molded under a pressure of 1 ton/cm$^2$ and was then sintered in an vacuum electric furnace at a temperature of 1100°C for 20 hours. Thus, the desired Ni and Ag-zeolite composite ceramic product was obtained. The flexural strength of the resultant ceramic is 45 kg/mm$^2$. This is a large flexural strength and, therefore, this ceramic poduct provides an excellent taughness.

**Claims**

1. A metal exchanged zeolite for use in the production of a metal zeolite composite ceramic comprising (i) 40% to 95% by weight of zeolite and (ii) 5% to 60% by weight of a metal.

2. A metal exchanged zeolite as claimed in claim 1, wherein said metal is dispersed in the zeolite in the form of a fine particle having a size of 0.5 µm or less.

3. A metal exchanged zeolite as claimed in claim 1, wherein said metal is zirconium, titanium, cobalt, chromium, molybdenum, tungsten, magnesium, aluminum, rubidium, yttrium, zinc, thallium, lanthanum, cesium, iron, cobalt, nickel, or a mixture thereof.

4. A metal exchanged zeolite as claimed in claim 1, wherein said metal is silver, manganese, nickel, cobalt, cadmium, tin, platinum, copper, or a mixture thereof.

5. A metal exchanged zeolite as claimed in claim 1, wherein said metal is strontium, rubidium, zirconium, tin, lead, or a mixture thereof.

6. A metal exchanged zeolite as claimed in claim 1, wherein said metal is molybdenum, zirconium, or a mixture thereof.

7. A process for producing a metal exchanged zeolite for use in the production of a metal zeolite composite ceramic comprising the step of: bringing sodium-type or potassium-type zeolite in the form of powder into contact with an aqueous solution containing a metal ion capable of substituting for sodium or potassium ion, whereby 70% or more of sodium and potassium ions of the zeolite are exchanged with the metal ion.

8. A process as claimed in claim 7, wherein said metal is aluminium, barium, cadmium, calcium, cerium, cesium, cobalt, copper, gold, iron, lanthanum, lead, magnesium, manganese, molybdenum, neodymium, nickel, niobium, palladium, platinum, samarium, silver, strontium, tin, titanium, tungsten, yttrium, zinc, zirconium, or a mixture thereof.

9. A process as claimed in claim 7, wherein said metal ion exchanged zeolite is further heated under a reducing atmosphere at a temperature of 200°C to 2000°C.

10. A process for producing a metal-zeolite composite ceramic comprising the steps of:

(a) bringing sodium-type or potassium-type zeolite in the form of powder into contact with an aqueous solution containing a metal ion capable of substituting for sodium ion or potassium ion, whereby 70% or more of sodium and potassium ions of the zeolite are exchanged with the metal ion, and

(b) heating the metal ion exchanged zeolite under a reducing atmosphere at a temperature of 200°C to 2000°C, followed by or simultaneously with sintering at a temperature of 200°C to 2000°C.

0260071

# Fig. I

ZEOLITE          AQUEOUS METAL SALT SOLUTION

MIXING STIRRING

SOLID-LIQUID SEPARATION → AQUEOUS METAL SOLT SOLUTION

METAL ION EXCHANGED ZEOLITE SLURRY

WATER WASHING

DRYING

METAL ION EXCHANGED ZEOLITE POWDER

H₂ GAS → REDUCTION          MOLDING

METAL ZEOLITE COMPOSITE POWDER

MOLDING          REDUCTION ← H₂ GAS

SINTERING          SINTERING

METAL ZEOLITE COMPOSITE CERAMIC